# EUROPÄISCHE PATENTSCHRIFT

(11) **EP 2 947 337 B1**
(45) Veröffentlichungstag und Bekanntmachung des Hinweises auf die Patenterteilung: **13.11.2019**
(21) Anmeldenummer: 15168372.9
(22) Anmeldetag: 20.05.2015
(51) Int. Cl.: F16B 37/16, F16B 37/04, B60B 33/00, F16B 12/14

(54) **FORMTEIL, VERFAHREN ZUM HERSTELLEN SOWIE VERWENDUNG EINES FORMTEILS ZUR VERSCHRAUBUNG VON BOLZEN MIT EINEM GEWINDEABSCHNITT UND EINEM WERKZEUGANSATZ**
MOULDED PART, METHOD FOR PRODUCTION AND USE OF SUCH A MOULDED PART FOR SCREWING OF BOLTS WITH A THREAD SECTION AND A TOOL APPROACH
PIÈCE DE FORMAGE, PROCÉDÉ DE FABRICATION ET D'UTILISATION D'UNE PIÈCE DE FORMAGE DESTINÉE AU VISSAGE DE BOULONS DOTÉS D'UNE SECTION DE FILETAGE ET D'UN EMBOUT D'OUTIL

(30) Priorität: 20.05.2014 DE 102014209597
(43) Veröffentlichungstag der Anmeldung: 25.11.2015
(73) Patentinhaber: FM Kunststofftechnik GmbH, 26219 Bösel (DE)
(72) Erfinder: Muhammad, Khasim, 49681 Garrel (DE)
(74) Vertreter: Eisenführ Speiser

(56) Entgegenhaltungen:
- DE-A1- 3 201 281
- JP-A- S62 297 522
- US-A- 5 480 273
- US-A1- 2006 162 505

## Beschreibung

Die vorliegende Erfindung betrifft ein Formteil zur Verschraubung von Bolzen mit einem Gewindeabschnitt und einem Werkzeugansatz, insbesondere zur Befestigung von anschraubbaren Möbelteilen, wie z.B. Möbelrollen, an Möbelkörpern oder anderen Möbelteilen, ein Verfahren zum Herstellen eines Formteils sowie eine Verwendung eines Formteils.

Gemäß dem Stand der Technik werden Möbel zum einfacheren Transport, insbesondere, um Transportfläche und Verpackungsmaterial zu sparen, unmontiert zum Aufstellungsort transportiert. Nach dem Transport werden diese Möbel von einer Servicekraft oder vom Erwerber selbst entpackt und montiert.

Insbesondere bei Büromöbeln, wie z.B. Rollcontainern, müssen z.B. Möbelrollen an einem Schrankkörper, der bereits vormontiert geliefert wurde oder zuvor am Einsatzort montiert wurde, angebracht bzw. befestigt werden. Derartige Möbelrollen dienen, um den Schrankkörper einfach zu verschieben und an verschiedenen Einsatzorten zu positionieren. Üblicherweise werden vormontierte Möbelrollen verwendet, die einen Grundkörper aufweisen, an dem ein mittels einer Achse gelagertes Rad befestigt ist. Am Grundkörper ist ferner ein Bolzen drehbar gelagert, wobei der Bolzen ein Gewindeabschnitt und einen Werkzeugansatz aufweist. Ein derartiger Bolzen wird häufig auch als Gewindestift bezeichnet.

Zur Befestigung der Möbelrolle am Schrankkörper wird der Schrankkörper auf seinen Kopf gedreht und der Bolzen der Möbelrolle mit seinem Gewindeabschnitt in vorbereitete, insbesondere verstärkte, Innengewinde an der Unterseite des Schrankkörpers eingedreht bzw. in diesen verschraubt. Vor dem Einführen des Bolzens in das Innengewinde des Schrankkörpers wird eine Unterlegscheibe oder Beilagscheibe über den Bolzen geschoben, sodass beim späteren Festziehen der Verschraubung oder Schraubverbindung des Bolzens mit dem Möbelkörper Beschädigungen vermindert werden. Beschädigungen werden durch eine Unterlegscheibe vermindert, da diese die Spannkraft, die vom Werkzeugansatz auf den Schrankkörper ausgeübt wird, gleichmäßig über die Unterlegscheibe verteilt. Zur Verspannung oder zum Festziehen der Verschraubung des Bolzens mit dem Gewindeabschnitt am Schrankkörper wird ein dem Werkzeugansatz entsprechendes Werkzeug verwendet.

Die Verschraubung des Bolzens wird dadurch erschwert, dass nach dem Eindrehen des Bolzens in den Schrankkörper ein Festziehen mit einem Werkzeug nötig ist, das einerseits für die Montage bereitgestellt werden muss, andererseits aber nach der Montage überflüssig ist und daher zu Kosten bei der Herstellung führt, die keinen Nutzen beim Einsatz des Möbels selbst bringen. Ferner ist eine verwendete Unterlegscheibe leicht verlierbar bzw. rutscht diese leicht vom Bolzen ab, wenn der Bolzen z.B. kopfüber in ein vorbereitetes Innengewinde eingeführt wird und gleichzeitig ein Werkzeug für die Verschraubung gehalten werden muss.

US 5,480,273 offenbart eine Vorrichtung, mit der der Kopf eines Bolzens aufgenommen werden kann, um den Bolzen mithilfe der Vorrichtung, die drei angeformte Arme aufweist, werkzeuglos mit einer Mutter zu verbinden.

Aufgabe der vorliegenden Erfindung ist demnach die Verschraubung von Bolzen mit einem Gewindeabschnitt und einem Werkzeugansatz, insbesondere bei der Montage von Möbelteilen an Schrankkörpern oder anderen Möbelteilen, zu vereinfachen und Kosten des Möbels zu verringern, die lediglich durch Montagematerial entstehen, welches keinen Nutzen beim später fertig zusammengebauten Möbel bringt. Zudem soll eine evtl. spätere Demontage erleichtert werden.

Zur Lösung der Aufgabe wird erfindungsgemäß ein Formteil zur Befestigung oder Verschraubung von Bolzen mit einem Gewindeabschnitt und einem Werkzeugansatz gemäß Anspruch 1 vorgeschlagen. Ferner wird ein Verfahren zum Herstellen des Formteils gemäß Anspruch 8 und die Verwendung eines Formteils zur Befestigung von Möbelteilen gemäß Anspruch 9 vorgeschlagen.

Das erfindungsgemäße Formteil zur Verschraubung von Bolzen mit einem Gewindeabschnitt und einem Werkzeugansatz dient insbesondere, um anschraubbare Möbelteile, wie z.B. Möbelrollen, an denen ein Bolzen mit Gewindeabschnitt und Werkzeugansatz angeordnet ist, mit Möbelkörpern, insbesondere Schrankkörpern, oder anderen Möbelteilen zu verschrauben oder um die Bolzen mit ihren Gewindeabschnitten an den Möbelkörbern festzuziehen

Das Formteil umfasst dazu zumindest drei Abschnitte, nämlich einen Kraftverteilabschnitt, einen Werkzeugabschnitt und einen Hebelabschnitt. Der Kraftverteilabschnitt ist ein im Wesentlichen flach ausgebildeter Abschnitt, der eine erste Seitenfläche und eine zweite Seitenfläche aufweist. Die erste und die zweite Seitenfläche liegen einander gegenüber bzw. entsprechen zwei im Wesentlichen parallelen Außenflächen des Kraftverteilabschnitts. Ferner weist der Kraftverteilabschnitt einen Durchbruch auf. Der Durchbruch führt von der ersten Seitenfläche durch den Kraftverteilabschnitt und durch die zweite Seitenfläche. Der Durchbruch führt also im Wesentlichen senkrecht durch den Kraftverteilabschnitt und die Seitenflächen hindurch. Zudem ist zumindest die erste Seitenfläche im Wesentlichen eben ausgebildet.

An den Kraftverteilabschnitt grenzt auf der zweiten Seitenfläche des Kraftverteilabschnitts der Werkzeugabschnitt. Der Werkzeugabschnitt umfasst ein Innenprofil, das konzentrisch zum Durchbruch des Kraftverteilabschnitts angeordnet ist. Der größte Durchmesser des Innenprofils ist hierbei größer als der größte Durchmesser des Durchbruchs. Das Innenprofil dient insbesondere zur Aufnahme eines Werkzeugansatzes z.B. eines Bolzens.

Ferner umfasst das Formteil einen Hebelabschnitt, der an den Kraftverteilabschnitt und/oder den Werkzeugabschnitt angrenzt. Der Hebelabschnitt dient zum Ausüben eines Drehmoments auf einen im Innenraum des Innenprofils liegenden Angriffspunkt, wobei der Angriffspunkt insbesondere im Zentrum des Innenprofils liegt. Im Zentrum oder im Innenraum liegend bedeutet hier insbesondere auf einer Symmetrieachse durch das Innenprofil liegend. Zur Ausübung des Drehmoments ist der Hebelabschnitt direkt mit dem Werkzeugabschnitt oder über den Kraftverteilabschnitt mit dem Werkzeugabschnitt verbunden, sodass eine auf den Hebelabschnitt ausgeübte Kraft auf den Werkzeugabschnitt übertragen wird.

Ein Bolzen mit Gewindeabschnitt und Werkzeugansatz ist somit mit dem Gewindeabschnitt durch den Durchbruch hindurchführbar, bis der Werkzeugansatz im Innenprofil des Werkzeugabschnitts, insbesondere in Drehrichtung des Gewindes formschlüssig, eingeführt ist. Mit dem Hebelabschnitt lässt sich dann über den Werkzeugabschnitt eine Kraft auf den Werkzeugansatz des Bolzens ausüben, sodass der Gewindeabschnitt in ein vorgesehenes Innengewinde einschraubbar ist.

Mit dem Hebelabschnitt und dem Werkzeugabschnitt ist ein Festziehen der Verschraubung ohne Werkzeug möglich, wobei gleichzeitig - aufgrund des Kraftverteilabschnitts - eine großflächige Verteilung der Spannkraft über die Oberfläche des Schrankkörpers erfolgt, auf dem die erste Seitenfläche aufliegt. Demnach ist eine Befestigung des Möbelteils werkzeuglos und ohne den Einsatz von Unterlegscheiben möglich.

Gemäß einer bevorzugten Ausführungsform weist das Innenprofil eine Innenmehrkantkontur auf, wobei gemäß weiteren spezielleren Ausführungsformen die Innenmehrkantkontur z.B. eine Innensechskantkontur, eine Innendoppelsechskantkontur oder eine Innenvierkantkontur ist. Eine Ausbildung des Innenprofils mit einer Innenmehrkantkontur dient, um einen Werkzeugansatz aufzunehmen. Ein Innenprofil, das eine Innensechskantkontur oder eine Innendoppelsechskantkontur aufweist, dient zur Aufnahme eines Außensechskantwerkzeugansatzes. Ferner dient ein Innenprofil, das eine Innenvierkantkontur aufweist, zur Aufnahme eines Außenvierkantwerkzeugansatzes.

Insbesondere ist der Werkzeugabschnitt somit dazu eingerichtet, einen Werkzeugansatz, nämlich insbesondere einen Außensechskantwerkzeugansatz oder einen Außenvierkantwerkzeugansatz, anzutreiben. Demnach ist vorteilhafterweise die Befestigung oder Verschraubung eines Bolzens mit einem Standardwerkzeugansatz möglich, ohne dass Bolzen mit einem Werkzeugansatz verwendet werden müssen, die an eine spezielle Form des Formteils angepasst sind. Demnach sind Standardwerkzeugansätze und somit Standardbolzen, also z.B. Schrauben mit Außensechskant- oder Außenvierkantkopf, als Bolzen insbesondere bei der Befestigung von Möbelteilen einsetzbar.

Gemäß einer weiteren bevorzugten Ausführungsform ist das Formteil ausgebildet, ausschließlich einen Werkzeugansatz über die Seite des Werkzeugabschnitts aufzunehmen, die der zweiten Seitenfläche abgewandt ist. Demnach ist also ein Werkzeugansatz in das Innenprofil des Werkzeugabschnitts nur über die der zweiten Seitenfläche abgewandte Seite in das Innenprofil einführbar. Somit ist ein Ansetzen des Formteils an den Bolzen nur möglich, wenn das Formteil richtig herum angesetzt wird.

Gemäß einer weiteren vorteilhaften Ausführungsform weist das Innenprofil des Werkzeugabschnitts eine für einen vordefinierten Werkzeugansatz vordefinierte Form auf.

Durch diese Form ist das Innenprofil derart eingerichtet, eine vordefinierte Haftreibungskraft zwischen einer Oberfläche des in das Innenprofil eingeführten Werkzeugansatzes und einer Oberfläche des Innenprofils zu erzeugen. Hierbei ist die Haftreibungskraft derart vordefiniert, sodass diese größer als die auf das Formteil wirkende Gewichtskraft ist. Die Verbindung zwischen Innenprofil und Werkzeugansatz kann demnach als eine Art leicht lösbare Presspassung oder Übermaßpassung bezeichnet werden.

Wird demnach ein Werkzeugansatz in das Innenprofil des Werkzeugabschnitts eingeführt, so verbleibt das Formteil am Werkzeugansatz, ohne dass das Formteil, z.B. bei über Kopf gehaltenem Bolzen, herunterfallen kann. Somit ist ein Anbringen des Bolzens oder eines Möbelteils mit einem Bolzen in beliebigen Positionen des Möbelteils möglich. Das Formteil wird sozusagen am zu befestigenden Bolzen bzw. Möbelteil im Wesentlichen unverlierbar gehalten.

Gemäß einer weiteren besonders bevorzugten Ausführungsform ist der Durchbruch rund und zur Durchführung eines Bolzens mit einem Gewindeabschnitt eingerichtet. Ferner weist der Durchbruch einen vordefinierten Durchmesser auf, der im Wesentlichen einem normierten Durchmesser entspricht, der für einen Bolzen mit einem normierten Durchmesser und einen normierten Gewinde vorgesehen ist.

Zur Anbringung eines Möbelteils mit einem Bolzen mit Gewindeabschnitt und Werkzeugansatz ist es demnach möglich, den Bolzen mit seinem Gewindeabschnitt durch den Durchbruch hindurchzuführen, bis der Werkzeugansatz, insbesondere vollständig, in das Innenprofil eingeführt ist. Der Werkzeugansatz liegt dann an der zweiten Seitenfläche des Kraftverteilabschnitts an. Dadurch hat der Werkzeugansatz eine ideale Auflagefläche auf der zweiten Seitenfläche des Kraftverteilabschnitts, sodass eine Kraftverteilung auf den Kraftverteilabschnitt beim Anziehen oder Festziehen des Bolzens, insbesondere bei der Befestigung eines anschraubbaren Möbelteils an einem weiteren Möbelteil oder an einen Schrankkörper, ideal über die gesamte erste Seitenfläche verteilt wird.

Erfindungsgemäß weist der Kraftverteilabschnitt mindestens einen minimalen Durchmesser auf, der mehr als dreimal so groß wie der maximale Durchmesser des Durchbruchs ist. Gemäß einem besonders bevorzugten Ausführungsbeispiel weist der Kraftverteilabschnitt einen minimalen Durchmesser auf, der vier- bis fünfmal so groß wie der maximale Durchmesser des Durchbruchs ist. Dank eines großen Kraftverteilabschnitts, der im Verhältnis größer ist als der Durchmesser herkömmlicher Unterlegscheiben, wird eine noch bessere Kraftverteilung beim Anziehen des Bolzen bzw. des anschraubbaren Möbelteils möglich, sodass Beschädigungen am Möbel und/oder Möbelteil weitestgehend vermindert werden.

Gemäß einer weiteren bevorzugten Ausführungsform erstreckt sich der Hebelabschnitt im Wesentlichen angrenzend an den Kraftverteilabschnitt im Wesentlichen bis zum Außenrand des Kraftverteilabschnitts. Vorteilhafterweise ist somit die Ausübung eines hohen Drehmoments mit dem Werkzeugabschnitt auf den Werkzeugansatz eines Bolzens möglich, ohne ein zusätzliches Werkzeug zu verwenden. Eine hohe Spannkraft des Bolzens wird demnach auch werkzeuglos erreicht.

Gemäß einer weiteren bevorzugten Ausführungsform besteht das Formteil aus einem physikalisch und/oder chemisch gehärteten Material oder ist daraus hergestellt. Dieses Material ist insbesondere Kunststoff, Kunstharz oder Metallguss, z.B. Zinkguss. Weitere bevorzugte Materialien für das Formteil sind z.B. Eisen-Kohlenstoff-Verbindungen, wie Gusseisen und Stahl, Nichteisenmetalle, wie Kupfer, Blei, Zinn, Zink, Nickel und ihre Legierungen und Leichtmetalle wie Aluminium, Magnesium und Titan sowie ihre Legierungen. Des Weiteren kann das Formteil auch aus anderen gießbaren Werkstoffen bzw. Materialien, wie zum Beispiel aus Ton, Keramik oder Gips durch Gießen hergestellt werden.

Vorteilhaft an derartigen Materialien ist, dass sie einerseits leicht formbar sind und andererseits nach dem Formen sicher ihre Form bewahren. Ferner sind derartige Materialien leicht einfärbbar, um die Farbe des Formteils z.B. an die Farbe eines Möbelteils anzupassen. Dadurch werden dann die Bolzen, die üblicherweise aus Metall sind durch das Formteil derart verdeckt, sodass der Metlallfarbton der Bolzen nicht störend gegenüber der übrigen Lackierung auffällt, ohne dass ein zusätzliches Lackieren oder Färben der Formteile erfolgen muss. Demnach ist ein ästhetischer Eindruck des Formteils möglich, ohne dass das Formteil nach der Herstellung separat in einem Farbgebungsschritt angepasst werden muss. Vielmehr wird einfach ein eingefärbtes Ausgangsmaterial zur Herstellung des Formteils verwendet.

Ferner betrifft die Erfindung ein Verfahren zum Herstellen einer Ausführungsform des Formteils zum Verschrauben von Bolzen mit einem Gewindeabschnitt und einem Werkzeugansatz, insbesondere zum Verbinden von anschraubbaren Möbelteilen an anderen Möbelteilen oder Möbeln, wobei das Formteil in einem einzigen Form- oder Gussschritt geformt oder gegossen wird. Demnach sind nicht wie beim Stand der Technik mehrere Herstellungsschritte zur Herstellung eines Werkzeugs und einer Unterlegscheibe oder Beilagscheibe nötig, sondern Werkzeug und Unterlegscheibe werden sozusagen in einem Arbeitsschritt in Form des Formteils hergestellt.

Ferner umfasst die Erfindung die Verwendung eines Formteils gemäß einem der genannten Ausführungsformen zum Verschrauben von Bolzen mit einem Gewindeabschnitt und einem Werkzeugansatz, wobei durch Verwendung des Formteils eine werkzeuglose Befestigung eines Bolzens ermöglicht wird. Demnach kann das anschraubbare Möbelteil an einen Schrankkörper oder ein anderes Möbelteil angeschraubt werden, ohne ein zusätzliches Werkzeug zu verwenden.

Nachstehend ist die Erfindung anhand von Ausführungsbeispielen unter Bezug auf die beiliegenden Figuren näher beschrieben. Es zeigen:
- Fig. 1: eine perspektivische Ansicht eines Bolzens mit einer Möbelrolle;
- Fig. 2: eine perspektivische Ansicht eines Ausführungsbeispiels des Formteils;
- Fig. 3: eine Unteransicht auf ein Ausführungsbeispiels des Formteils;
- Fig. 4: eine Draufsicht ein Ausführungsbeispiels des Formteils;
- Fig. 5: eine Seitenansicht bzw. Schnittdarstellung des Formteils entlang der Schnittlinie A-A aus Fig. 2; und
- Fig. 6: eine Seitenansicht bzw. Schnittdarstellung des Formteils entlang der Schnittlinie B-B aus Fig. 2.

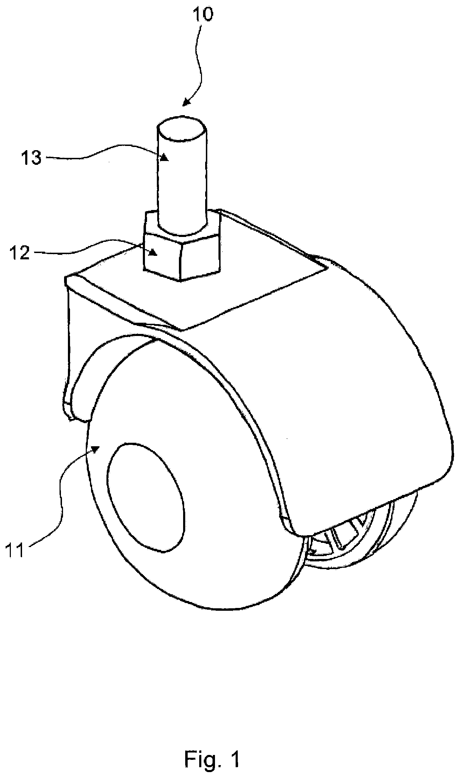

Fig. 1 zeigt eine perspektivische Ansicht eines Bolzens 10 mit einer Möbelrolle 11, wie sie aus dem Stand der Technik bekannt ist. Der Bolzen 10 weist einen Werkzeugansatz 12 auf, der als Außensechskantwerkzeugansatz ausgebildet ist. Ferner weist der Bolzen 10 an seinem einen Ende einen Gewindeabschnitt 13 auf und ist am anderen Ende (hier nicht im Detail dargestellt) drehbar mit der Möbelrolle 11 verbunden.

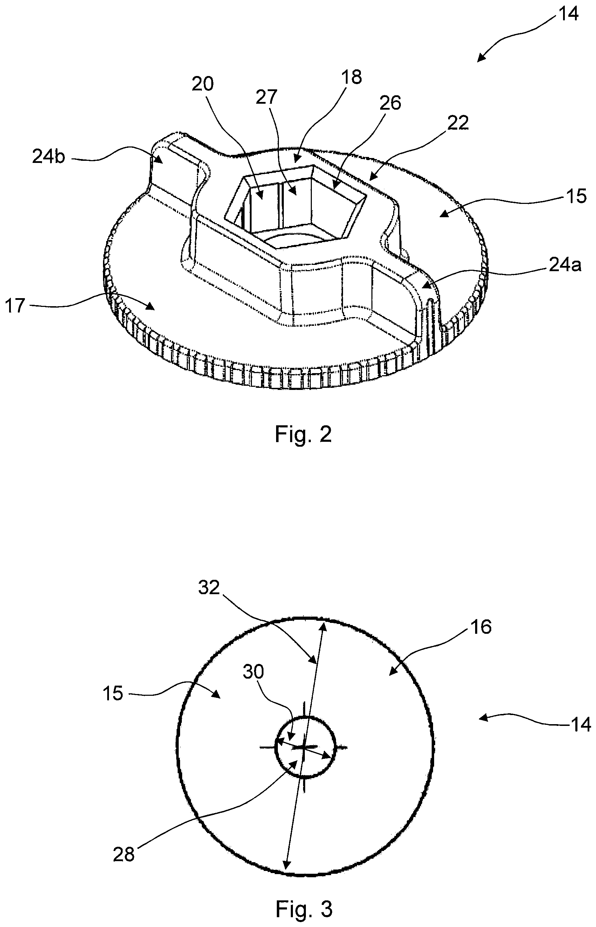

Fig. 2 zeigt eine perspektivische Ansicht eines Ausführungsbeispiels des Formteils 14 zur Verschraubung von Bolzen 10 mit einem Werkzeugansatz 12 und Gewindeabschnitt 13, insbesondere zur Befestigung von anschraubbaren Möbelteilen, insbesondere von Möbelrollen, an Möbelkörpern, insbesondere Schrankkörpern, oder anderen Möbelteilen.

Das Formteil 14 umfasst einen Kraftverteilabschnitt 15 mit zwei Seitenflächen, wobei in Fig. 2 nur die zweite Seitenfläche 17 dargestellt ist. Der Kraftverteilabschnitt 15 entspricht dem flachen, hier runden Teil des Formteils 14. Ferner weist das Formteil 14 einen Werkzeugabschnitt 18 auf. Der Werkzeugabschnitt 18 weist ein Innenprofil 20 auf, wobei das Innenprofil 20 eine Innenmehrkantkontur 22, hier eine Innensechskantkontur, aufweist.

Ferner weist das Formteil 14 zwei Hebelabschnitte 24a und 24b, die an den Werkzeugabschnitt 18 und den Kraftverteilabschnitt 15 grenzen. Das Innenprofil 20 ist im oberen Bereich 26 leicht abgeschrägt, um ein Einführen des Werkzeugansatzes 12 in den Innenraum 27 zu erleichtern.

Fig. 3 zeigt nun die Unteransicht des Formteils 14 mit Draufsicht auf die erste Seitenfläche 16 des Kraftverteilabschnitts 15. Im Kraftverteilabschnitt 15 befindet sich ein Durchbruch 28. Der Durchbruch führt durch den Kraftverteilabschnitt 15 und somit durch die erste Seitenfläche 16 und die zweite Seitenfläche 17. Der Durchbruch 28 ist rund und weist einen vordefinierten Durchmesser 30 auf, der einem normierten Durchmesser für einen vordefinierten Bolzen 10 mit einem normierten Durchmesser und einem normierten Gewindeabschnitt 13 aufweist. Ferner weist der Kraftverteilabschnitt 15 einen Durchmesser 32 auf, der etwa vier- bis fünfmal so groß wie der Durchmesser 30 des Durchbruchs 28 ist.

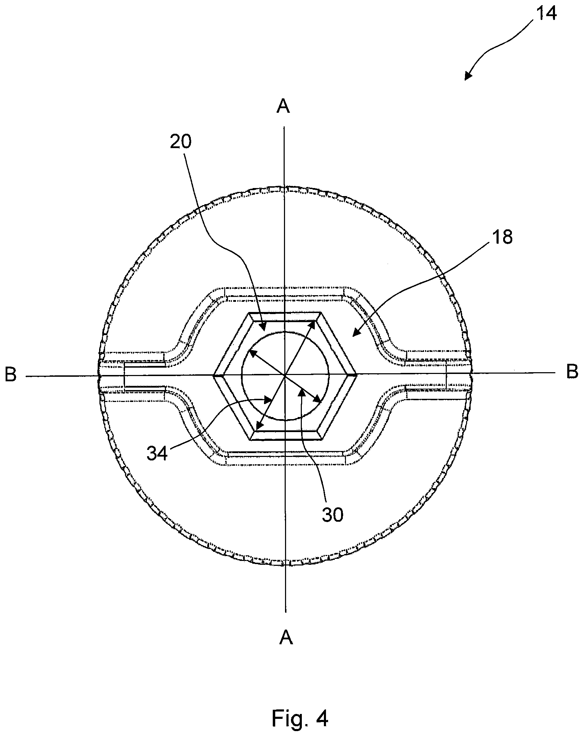

Fig. 4 zeigt eine Draufsicht auf das Formteil 14. Hier ist sichtbar dass der Werkzeugabschnitt 18 konzentrisch zum Durchbruch 28 angeordnet ist. Das Innenprofil 20 des Werkzeugabschnitts weist einen größten Durchmesser 34 auf, der größer als der größte Durchmesser 30 des Durchbruchs 28 ist.

Demnach ist ein Bolzen 10 aus der Blickrichtung auf das Formteil 14 der Fig. 3 mit seinem Gewindeabschnitt 13 durch den Durchbruch 28 hindurchführbar, bis der Werkzeugansatz 12 des Bolzens 10 in das Innenprofil 20 eintritt. Ist der Werkzeugansatz 12 vom Innenprofil 20 aufgenommen, also bis auf den Vorsprung, der durch die zweite Seitenfläche 17 am Ende des Werkzeugabschnitts 18 gebildet wird, in das Innenprofil eingeführt, so dient der Werkzeugabschnitt 18 mit seinem Innenprofil 20 zum Ausüben eines Drehmoments auf den Bolzen 10. Der Bolzen 10 kann demnach in einen nicht dargestellten Schrankkörper eingeschraubt werden. Demnach ist die Möbelrolle 11 bzw. der Bolzen 10 nun mit dem Formteil 14 an einem Schrankkörper werkzeuglos anbringbar oder verschraubbar.

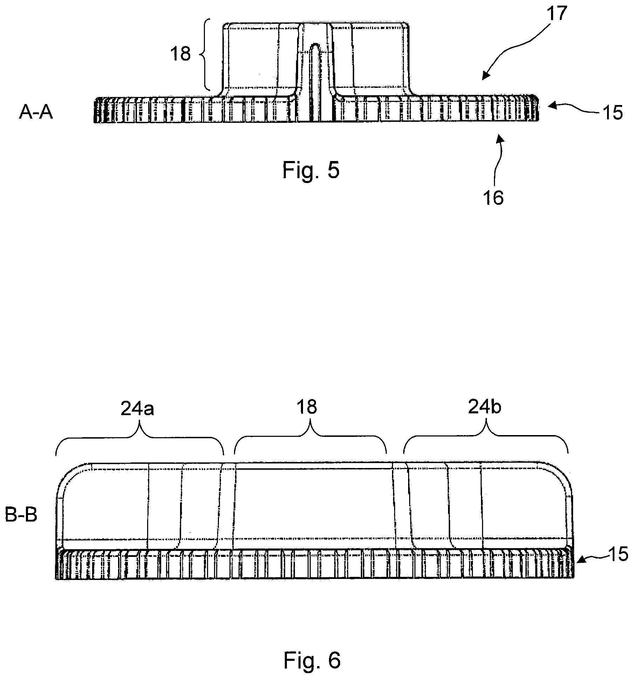

Ferner sind in der Fig. 3 noch die Schnittlinien A-A und B-B eingezeichnet, wobei die entsprechenden Seitenansichten in den Fig. 4 und 5 dargestellt sind.

Fig. 4 zeigt dazu die Seitenansicht des Formteils 14 entsprechend der Schnittlinie A-A. Aus dieser Seitenansicht ist der im Wesentlichen flache Kraftverteilabschnitt 15 mit seiner ersten Seitenfläche 16, die im Wesentlichen eben ist, und mit seiner zweiten Seitenfläche 17, die hier auch im Wesentlichen eben ist, dargestellt. Ferner ist der Werkzeugabschnitt 18, der an den Kraftverteilabschnitt 15 angrenzt, und zwar an die zweite Seitenfläche 17 des Kraftverteilabschnitts 15 dargestellt.

In Fig. 5 ist eine weitere Seitenansicht des Formteils 14 durch die Schnittlinie B-B dargestellt. Wieder sind der Kraftverteilabschnitt 15 sowie der Werkzeugabschnitt 18 dargestellt. Aus dieser Ansicht sind jedoch auch die Hebelabschnitte 24a und 24b zu erkennen, die sich im Wesentlichen bis zum Außenrand des Kraftverteilabschnitts 15 erstrecken, um eine hohes Drehmoment auf den Innenraum 27 des Innenprofils 20 bzw. den Bolzen 10 auszuüben.

Mit dem in den Fig. 1 bis 5 dargestellten Formteil 14 ist die werkzeuglose Montage eines anschraubbaren Möbelteils, insbesondere einer Möbelrolle mit einem drehbaren Bolzen mit Gewindeabschnitt und Werkzeugansatz an Möbelkörpern oder anderen Möbelteilen werkzeuglos möglich. Ferner ist eine Befestigung auch ohne zusätzliche Unterlegscheibe möglich.

## Patentansprüche

1. Formteil zur Verschraubung von Bolzen (10) mit einem Gewindeabschnitt (13) und einem Werkzeugansatz (12), umfassend:
einen flachen, runden Kraftverteilabschnitt (15) mit einer ersten Seitenfläche (16), einer gegenüber der ersten Seitenfläche (16) liegenden zweiten Seitenfläche (17) und einem durch die Seitenflächen (16,17) hindurchführenden Durchbruch (28), wobei die erste Seitenfläche (16) im Wesentlichen eben ausgebildet ist,
einen auf der zweiten Seitenfläche (17) des Kraftverteilabschnitts (15) angrenzenden Werkzeugabschnitt (18) mit einem zum Durchbruch (28) im Wesentlichen konzentrisch angeordneten Innenprofil (20), wobei der größte Durchmesser (34) des Innenprofils (20) größer als der größte Durchmesser (30) des Durchbruchs (28) ist und
mindestens einen an den Kraftverteilabschnitt (15) und/oder den Werkzeugabschnitt (18) angrenzenden Hebelabschnitt (24a, 24b) zum Ausüben eines Drehmoments auf einen im Innenraum (27), insbesondere im Zentrum, des Innenprofils (20) liegenden Angriffspunkt,
**dadurch gekennzeichnet, dass**
der Kraftverteilabschnitt (15) mindestens einen minimalen Durchmesser (32) aufweist, der mehr als dreimal, insbesondere vier- bis fünfmal, so groß wie der maximale Durchmesser (30) des Durchbruchs (28) ist.

2. Formteil nach Anspruch 1, wobei
das Innenprofil (20) eine Innenmehrkantkontur (22), insbesondere eine Innensechskantkontur, eine Innendoppelsechskantkontur oder Innenvierkantkontur, aufweist und der Werkzeugabschnitt (18) dazu eingerichtet ist, einen Werkzeugansatz, insbesondere einen Außensechskant- oder Außenvierkantwerkzeugansatz, anzutreiben.

3. Formteil nach Anspruch 1 oder 2, wobei
das Formteil (14) ausgebildet ist, einen Werkzeugansatz ausschließlich über die Seite des Werkzeugabschnitts (18), die der zweiten Seitenfläche (17) abgewandt ist, in das Innenprofil (20) des Werkzeugabschnitts (18) einzuführen.

4. Formteil nach einem der vorhergehenden Ansprüche, wobei
das Innenprofil (20) des Werkzeugabschnitts (18) eine für einen vordefinierten Werkzeugansatz vordefinierte Form aufweist, wobei das Innenprofil (20) eingerichtet ist, eine vordefinierte Haftreibungskraft zwischen einer Oberfläche des in das Innenprofil (20) eingeführten Werkzeugansatzes (13) und einer Oberfläche des Innenprofils (20) zu erzeugen, wobei die Haftreibungskraft größer als die auf das Formteil (14) wirkende Gewichtskraft ist.

5. Formteil nach einem der vorhergehenden Ansprüche, wobei
der Durchbruch (28) rund ist und zur Durchführung eines Bolzens mit einem Gewindeabschnitt dient und der Durchbruch einen vordefinierten Durchmesser (30) aufweist, der im Wesentlichen einem normierten Durchmesser für einen vordefinierten Bolzen (10) mit einem normierten Durchmesser und einem Gewindeabschnitt (13) mit einem normierten Gewinde entspricht.

6. Formteil nach einem der vorhergehenden Ansprüche, wobei
der Hebelabschnitt (24a, 24b) sich im Wesentlichen angrenzend an den Kraftverteilabschnitt (15) bis zum Außenrand des Kraftverteilabschnitts (15) erstreckt.

7. Formteil nach einem der vorhergehenden Ansprüche, wobei
das Formteil (14) aus einem physikalisch und/oder chemisch gehärteten Material, insbesondere Kunststoff, Kunstharz oder Metallguss, z.B. Zinkguss, besteht und/oder hergestellt ist.

8. Verfahren zum Herstellen eines Formteils nach einem der Ansprüche 1 bis 7 zum Verschrauben von Bolzen (10) mit einem Gewindeabschnitt (13) und einem Werkzeugansatz (12), wobei das Formteil (14) in einem einzigen Formschritt oder Gussschritt geformt oder gegossen wird.

9. Verwendung eines Formteils nach einem der vorhergehenden Ansprüche 1 bis 7 zur Verschraubung von Bolzen (10) mit einem Gewindeabschnitt (13) und einem Werkzeugansatz (12), wobei die Verschraubung, abgesehen vom Formteil (14), werkzeuglos erfolgt.

## Claims

1. Moulded part for the screwing of bolts (10) which have a threaded portion (13) and a tool attachment piece (12), comprising:
a flat, round force distribution portion (15) having a first side face (16), a second side face (17) located opposite the first side face (16), and an aperture (28) which passes through the side faces (16, 17), wherein the first side face (16) is substantially planar,
a tool portion (18) which adjoins the second side face (17) of the force distribution portion (15) and which has an inner profile (20) arranged substantially concentrically in relation to the aperture (28), wherein the largest diameter (34) of the inner profile (20) is larger than the largest diameter (30) of the aperture (28), and
at least one lever portion (24a, 24b), adjoining the force distribution portion (15) and/or the tool portion (18), for exerting a torque on an application point that is located in the interior (27), in particular in the centre, of the inner profile (20),
**characterized in that**
the force distribution portion (15) has at least a minimum diameter (32) which is more than three times, in particular four to five times, as large as the maximum diameter (30) of the aperture (28).

2. Moulded part according to claim 1, wherein
the inner profile (20) has an internally polygonal contour (22), in particular an internally hexagonal contour, an internally bi-hexagonal contour or an internally square contour, and the tool portion (18) is configured to drive a tool attachment piece, in particular an externally hexagonal tool attachment piece or an externally square tool attachment piece.

3. Moulded part according to claim 1 or 2, wherein
the moulded part (14) is designed for introducing a tool attachment piece into the inner profile (20) of the tool portion (18) exclusively via the side of the tool portion (18) that faces away from the second side face (17).

4. Moulded part according to any one of the preceding claims, wherein
the inner profile (20) of the tool portion (18) has a shape that is predefined for a predefined tool attachment piece, wherein the inner profile (20) is configured to generate a predefined static friction force between a surface of the tool attachment piece (13) introduced into the inner profile (20) and a surface of the inner profile (20), wherein the static friction force is greater than the weight force acting on the moulded part (14).

5. Moulded part according to any one of the preceding claims, wherein
the aperture (28) is round and serves for the passage of a bolt having a threaded portion, and the aperture has a predefined diameter (30) which substantially corresponds to a standardized diameter for a predefined bolt (10) having a standardized diameter and a threaded portion (13) having a standardized thread.

6. Moulded part according to any one of the preceding claims, wherein
the lever portion (24a, 24b) extends substantially adjacent to the force distribution portion (15) to the outer edge of the force distribution portion (15).

7. Moulded part according to any one of the preceding claims, wherein
the moulded part (14) is made of and/or is produced from a physically and/or chemically hardened material, in particular plastic, synthetic resin or cast metal, for example cast zinc.

8. Method for producing a moulded part according to any one of claims 1 to 7 for the screwing of bolts (10) which have a threaded portion (13) and a tool attachment piece (12), wherein the moulded part (14) is moulded or cast in a single moulding step or casting step.

9. Use of a moulded part according to any one of the preceding claims 1 to 7 for the screwing of bolts (10) which have a threaded portion (13) and a tool attachment piece (12), wherein the screwing takes place without any tools apart from the moulded part (14).

## Revendications

1. Pièce moulée servant à visser des boulons (10) avec une section filetée (13) et un embout d'outil (12), comprenant :
une section de répartition de force (15) plate ronde avec une première face latérale (16), une seconde face latérale (17) située en regard de la première face latérale (16) et un ajour (28) menant à travers les faces latérales (16, 17), dans laquelle la première face latérale (16) est réalisée de manière sensiblement plane,
une section d'outil (18) jouxtant sur la seconde face latérale (17) de la section de répartition de force (15) avec un profil intérieur (20) disposé de manière sensiblement concentrique par rapport à l'ajour (28), dans laquelle le plus grand diamètre (34) du profil intérieur (20) est plus grand que le plus grand diamètre (30) de l'ajour (28) et
au moins une section de levier (24a, 24b), jouxtant la section de répartition de force (15) et/ou la section d'outil (18), servant à exercer un couple de rotation sur un point d'attaque situé dans l'espace intérieur (27), en particulier au centre, du profil intérieur (20),
**caractérisée en ce que**
la section de répartition de force (15) présente au moins un diamètre minimal (32), qui est plus de trois fois, en particulier quatre à cinq fois, plus grand que le diamètre maximal (30) de l'ajour (28).

2. Pièce moulée selon la revendication 1, dans laquelle
le profil intérieur (20) présente un contour intérieur à plusieurs arêtes (22), en particulier un contour intérieur à six arêtes, un double contour intérieur à six arêtes ou un contour intérieur à quatre arêtes, et la section d'outil (18) est mise au point pour entraîner un embout d'outil, en particulier un embout d'outil extérieur à six arêtes ou extérieur à quatre arêtes.

3. Pièce moulée selon la revendication 1 ou 2, dans laquelle
la pièce moulée (14) est réalisée pour introduire un embout d'outil exclusivement par l'intermédiaire du côté de la section d'outil (18), qui est opposé à la seconde face latérale (17), dans le profil intérieur (20) de la section d'outil (18).

4. Pièce moulée selon l'une quelconque des revendications précédentes, dans laquelle
le profil intérieur (20) de la section d'outil (18) présente une forme prédéfinie pour un embout d'outil prédéfini, dans laquelle le profil intérieur (20) est mis au point pour générer une force de friction de contact prédéfinie entre une surface de l'embout d'outil (13) introduit dans le profil intérieur (20) et une surface du profil intérieur (20), dans laquelle la force de friction de contact est plus importante que la force liée au poids agissant sur la pièce moulée (14).

5. Pièce moulée selon l'une quelconque des revendications précédentes, dans laquelle
l'ajour (28) est rond et sert à faire passer un boulon avec une section filetée et l'ajour présente un diamètre (30) prédéfini, qui correspond sensiblement à un diamètre normé pour un boulon (10) prédéfini avec un diamètre normé et une section filetée (13) avec un filetage normé.

6. Pièce moulée selon l'une quelconque des revendications précédentes, dans laquelle
la section de levier (24a, 24b) s'étend sensiblement de manière à jouxter la section de répartition de force (15) jusqu'au bord extérieur de la section de répartition de force (15).

7. Pièce moulée selon l'une quelconque des revendications précédentes, dans laquelle
la pièce moulée (14) est constituée de et/ou fabriquée à partir d'un matériau durci physiquement et/ou chimiquement, en particulier de matière plastique, de résine synthétique ou d'un métal coulé, par exemple de zinc coulé.

8. Procédé servant à fabriquer une pièce moulée selon l'une quelconque des revendications 1 à 7 servant à visser des boulons (10) avec une section filetée (13) et un embout d'outil (12), dans lequel la pièce moulée (14) est moulée ou coulée lors d'une unique étape de moulage ou étape de coulée.

9. Utilisation d'une pièce moulée selon l'une quelconque des revendications 1 à 7 servant à visser des boulons (10) avec une section filetée (13) et un embout d'outil (12), dans laquelle le vissage est effectué sans outil, abstraction faite de la pièce moulée (14).
